Europäisches Patentamt

European Patent Office

Office européen des brevets

(19)

(11) Numéro de publication : **0 368 727 B1**

(12) **FASCICULE DE BREVET EUROPEEN**

(45) Date de publication du fascicule du brevet :
24.07.91 Bulletin 91/30

(51) Int. Cl.⁵ : **G11C 16/06, G11C 7/00**

(21) Numéro de dépôt : **89403019.6**

(22) Date de dépôt : **02.11.89**

(54) **Dispositif de sécurité contre la détection non-autorisée de données protégées.**

(30) Priorité : **10.11.88 FR 8814707**

(43) Date de publication de la demande :
**16.05.90 Bulletin 90/20**

(45) Mention de la délivrance du brevet :
**24.07.91 Bulletin 91/30**

(84) Etats contractants désignés :
**DE GB IT NL**

(56) Documents cités :
**EP-A- 0 269 468**
**EP-A- 0 279 712**

(73) Titulaire : **SGS THOMSON
MICROELECTRONICS SA
7, Avenue Galliéni
F-94250 Gentilly (FR)**

(72) Inventeur : **Fruhauf, Serge
Cabinet BALLOT-SCHMIT 7 rue le Sueur
F-75116 Paris (FR)**
Inventeur : **Sourgen, Laurent
Cabinet BALLOT-SCHMIT 7 rue le Sueur
F-75116 Paris (FR)**

(74) Mandataire : **Ballot, Paul Denis Jacques et al
Cabinet Ballot-Schmit 7, rue le Sueur
F-75116 Paris (FR)**

Jouve, 18, rue Saint-Denis, 75001 PARIS

## Description

L'invention concerne la sécurité des informations confidentielles contenues dans des circuits intégrés.

Dans un certain nombre d'applications des circuits intégrés, et tout particulièrement les circuits contenus dans les cartes dites "cartes à puces", il est nécessaire d'interdire à des personnes non autorisées l'accès à des informations confidentielles stockées dans une mémoire du circuit.

Les informations confidentielles sont par exemple stockées dans des mémoires mortes (ROM), ou alors dans des mémoires non volatiles électriquement programmables (EPROM ou EEPROM).

Bien entendu, pour que ces informations soient réellement inaccessibles, il est nécessaire que les données inscrites dans la mémoire ne soient pas fournies sur les bornes d'entrée-sortie du circuit intégré. En pratique, on a donc prévu, dans des cas où le degré de confidentialité est particulièrement élevé, que le traitement des informations confidentielles soit effectué par un microprocesseur contenu dans le même circuit intégré que la mémoire. Ainsi, les informations circulent à l'intérieur du circuit intégré, entre le microprocesseur et la mémoire, mais elles ne parviennent pas sur des bornes externes d'accès au circuit intégré.

Cette précaution peut concerner la lecture des informations : elles sont lues et exploitées par un microprocesseur qui ne les transmettra pas à l'extérieur. Elle peut aussi concerner l'écriture d'informations dans la mémoire dans le cas des mémoires électriquement programmables : un microprocesseur écrit des informations qu'il a déterminé lui-même, le mode de détermination n'étant pas connu de l'utilisateur, et à aucun moment les informations écrites n'apparaissent sur les bornes extérieures.

On a cependant remarqué qu'il était possible d'accéder au moins partiellement au contenu de la mémoire d'une manière détournée qui consisterait à mesurer le courant consommé par le circuit intégré pendant une opération de lecture de la mémoire, ou encore une opération d'écriture.

En effet, l'opération de lecture d'un bit 0 ne consomme pas le même courant que l'opération de lecture d'un bit 1. Il en est de même pour l'opération d'écriture. Si la mémoire est lue ou écrite par mots de huit bits, la différence entre la lecture (ou l'écriture) de huit bits 0 et la lecture (ou l'écriture) de huit bits 1 est encore plus importante que celle d'un bit.

A titre d'exemple, la lecture d'un bit de mémoire peut consommer 200 microampères pour un bit 1 et rien pour un bit 0 dans le cas d'une mémoire morte codée par présence ou absence d'un transistor à l'adresse du bit considéré. Des exemples analogues pourraient être donnés pour des mémoires EPROM ou EEPROM, en lecture comme en écriture.

Par conséquent il est possible de déchiffrer partiellement ou totalement le contenu confidentiel d'une mémoire par observation du courant consommé pendant la lecture ou l'écriture de cette mémoire. L'utilisateur qui chercherait à frauder pourrait mesurer le courant consommé entre les bornes d'alimentation générale (accessibles obligatoirement à l'extérieur du circuit intégré).

A titre d'exemple de fraude possible sur la lecture d'informations confidentielles : on peut lire un programme confidentiel stocké en mémoire morte dans le circuit intégré, ou un code confidentiel d'habilitation stocké dans une mémoire électriquement programmable du circuit.

Un autre exemple de fraude, concernant cette fois l'écriture et non la lecture d'informations confidentielles, serait le suivant : dans certains circuits protégés, on prévoit que l'utilisateur doit introduire un code d'habilitation par un clavier chaque fois qu'il veut utiliser le circuit ; pour éviter la fraude par introduction systématique de tous les codes possibles, on prévoit de stocker en mémoire un bit d'erreur à chaque introduction de code erroné ; au bout de trois erreurs, les trois bits d'erreur déclenchent le blocage du fonctionnement du circuit. Mais là encore, on pourrait détecter la consommation du courant et en déduire qu'un bit d'erreur est en train d'être stocké ; on utiliserait cette connaissance pour interrompre très rapidement la mise en mémoire du bit d'erreur, annihilant donc la protection qui repose sur la possibilité de stocker à l'insu de l'utilisateur trois bits d'erreur en cas d'introduction successives de codes erronés.

Un circuit de protection de données confidentielles d'une mémoire est connu de EP-A-0 269 468, ledit circuit comprenant sur le même circuit intégré une cellule de simulation. Cette cellule ne consomme pas de courant pendant la programmation à "1" et débite, pendant la programmation à "0", un courant identique à celui d'une cellule-mémoire en condition de programmation à "1".

La présente invention cherche à éviter ces possibilités de fraude, principalement sur la lecture, mais aussi éventuellement sur l'écriture d'informations confidentielles.

L'invention propose d'incorporer au circuit intégré un circuit de protection comprenant plusieurs cellules susceptibles d'être commandées individuellement, ces cellules ayant deux états de consommation de courant différents selon le signal qui les commande, et un générateur de séquences pseudo-aléatoires pour commander ces cellules, de sorte qu'elles se trouvent chacune pseudo-aléatoirement dans un état ou un autre, rendant ainsi plus difficile la détermination d'informations confidentielles par lecture de consommation globale de courant du circuit intégré. La consommation vue des bornes extérieures du circuit sera en effet la superposition de la consommation réelle des cellules de mémoire et de la consommation pseudo-aléatoire des cellules du circuit de protection.

De préférence, les cellules, qu'on appellera ci-après cellules de simulation, sont construites de telle manière qu'elles consomment dans leurs deux états des courants sensiblement égaux à ceux de cellules mémoires. Le premier état correspondrait à la consommation pour un bit 0 de la mémoire et le deuxième correspondrait à la consommation pour un bit 1. Ainsi, la détection est encore plus difficile.

Selon que la mémoire doit être protégée vis-à-vis d'une lecture des informations stockées, ou vis-à-vis d'une détection des informations en cours d'écriture dans la mémoire, les cellules de simulation seront évidemment construites différemment, car les valeurs de consommation de courant ne sont pas identiques en lecture et en écriture.

Dans le cas d'une protection contre la lecture, la cellule pourra être constituée par un transistor identique aux transistors constituant les cellules de mémoire. Dans le cas d'une protection contre la détection d'informations en cours d'écriture, la cellule pourra être constituée par un transistor à grille flottante dont la grille flottante et la grille de commande seront court-circuitées.

Le générateur pseudo-aléatoire pourra être réalisé classiquement par une série de bascules en cascade, les sorties de certaines bascules étant rebouclées sur les entrées d'autres bascules à travers des portes OU-Exclusif.

Le caractère aléatoire peut encore être renforcé par variation aléatoire de la fréquence d'horloge qui commande ces bascules.

D'autres caractéristiques et avantages de l'invention apparaîtront à la lecture de la description détaillée qui suit et qui est faite en référence aux dessins annexés dans lesquels :
- la figure 1 représente un schéma bloc du circuit de protection selon l'invention ;
- la figure 2 représente un exemple de générateur de séquences pseudo-aléatoires utilisable dans le circuit de protection selon l'invention ;
- la figure 3 représente un schéma bloc indiquant comment le générateur de séquences pseudo-aléatoires peut être commandé par un oscillateur dont la fréquence est elle-même commandée par des sorties du générateur ;
- la figure 4 représente un schéma détaillé de l'oscillateur de la figure 3.

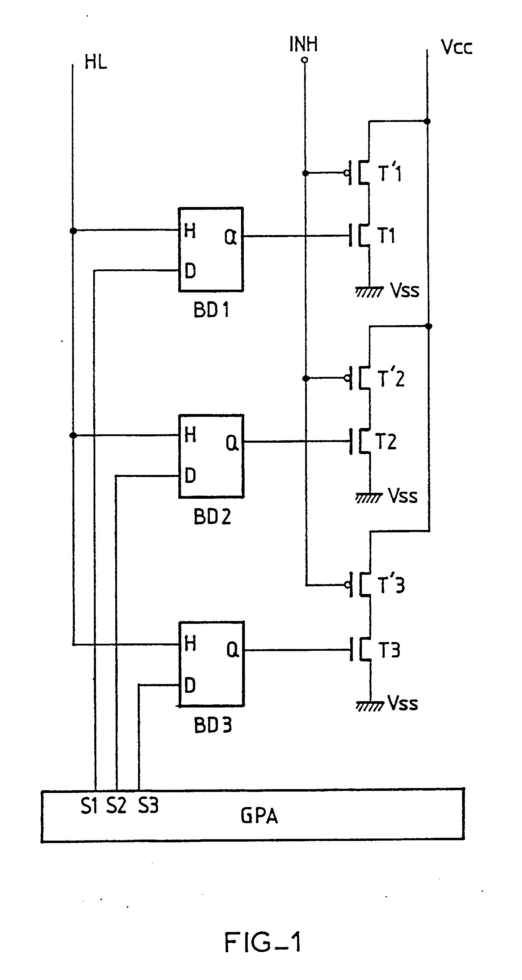

Le circuit de protection selon l'invention, représenté à la figure 1, est réalisé sur le même substrat de circuit intégré que le circuit à protéger, et il est alimenté par les mêmes bornes d'alimentation Vcc (niveau haut) et Vss (niveau bas). Il comprend essentiellement plusieurs cellules de simulation (ici trois cellules) commandées, à travers des bascules D respectives BD1 pour la première cellule, BD2 pour la deuxième, et BD3 pour la troisième, par trois sorties S1, S2, S3 d'un générateur de séquences pseudo-aléatoires GPA.

Chaque cellule de simulation est destinée à consommer soit un premier courant soit un second courant selon le niveau logique de sortie de la bascule qui la commande. Dans l'exemple représenté, l'élément essentiel de la cellule de simulation est un transistor, T1, T2, T3 respectivement pour chaque cellule. Ce transistor de simulation est connecté entre les bornes d'alimentation Vcc et Vss du circuit, de sorte qu'il consomme un courant I ou un courant nul selon le niveau de sortie de la bascule qui le commande.

Toutefois, comme on peut le voir sur la figure, on a prévu de préférence que le transistor T1 est en série avec un transistor T'1 entre Vcc et Vss, le transistor T2 est en série avec un transistor T'2, et le transistor T3 en série avec un transistor T'3. Les transistors T'1, T'2, T'3 sont des transistors d'inhibition, tous commandés par un même signal d'inhibition INH qui permet de contrôler l'instant où le circuit de protection doit effectivement fonctionner : lorsque le signal INH bloque les transistors T'1, T'2, T'3, le circuit de protection ne fonctionne plus. Dans l'exemple représenté, les transistors d'inhibition sont de type P alors que les transistors de simulation sont de type N.

Les transistors de simulation sont de préférence dimensionnés de telle sorte que leur consommation (courant I) soit sensiblement identique à la consommation d'une cellule de mémoire du circuit à protéger (non représenté) au moment où cette cellule est lue (dans le cas où on cherche à protéger la confidentialité d'informations en cours de lecture) ou écrite (dans le cas où on cherche à protéger la confidentialité d'informations en cours d'écriture).

Si on cherche à protéger une mémoire ROM contre la lecture d'informations confidentielles et si les cellules de mémoire sont constituées par un transistor dont la présence ou l'absence définit la valeur 1 ou 0 du bit stocké, les transistors de simulation seront de préférence de constitution et dimensions identiques aux transistors constituant les cellules de mémoire.

Si on cherche à protéger l'écriture dans une mémoire EPROM ou EEPROM dont les cellules de mémoire sont des transistors à grille flottante, les transistors de simulation T1, T2, T3 seront de préférence des transistors à grille flottante dont la grille de commander et la grille flottante sont court-circuitées. Ces transistors seront aussi dimensionnés de préférence comme les transistors des cellules de mémoire à protéger.

La commande de consommation de courant des cellules se fait par les sorties S1, S2, S3 du générateur de séquences pseudo-aléatoires qui fournit sur ces sorties des bits qui sont aléatoirement (en réalité pseudo-aléatoirement) des bits 0 ou 1.

Toutefois, la commande des transistors des transistors de simulation T1, T2, T3 se fait à travers les bascules D BD1, BD2, BD3, commandées par une horloge commune HL, de préférence synchronisée avec les horloges qui commandent les séquences de lecture ou d'écriture de la mémoire qu'on veut protéger.

De cette manière, les bits pseudo-aléatoires engendrés sur les sorties S1, S2, S3, ne sont transmis aux transistors qu'au front de montée de cette horloge HL, c'est-à-dire au moment où va être consommé le courant de lecture ou d'écriture des cellules de mémoire à protéger.

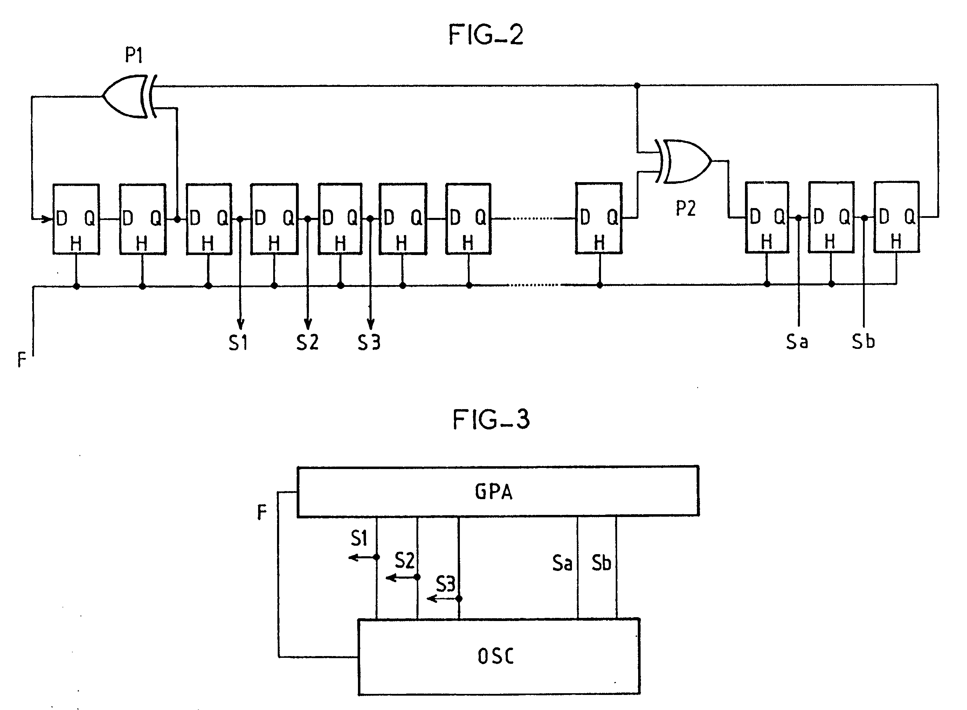

La figure 2 représente un exemple de constitution possible d'un générateur de séquence pseudo-aléatoire.

Ce générateur est constitué par N bascules D en cascade (la sortie de l'une étant reliée à l'entrée D de l'autre), toutes commandées par un même signal d'horloge de fréquence F. Deux rebouclages sont prévus en outre par l'intermédiaire de deux portes OU-EXCLUSIF, désignées respectivement par P1 et P2 : l'entrée de la première bascule est constituée par la sortie de la porte P1 qui a pour entrées d'une part la sortie de la deuxième bascule et d'autre part la sortie de la dernière bascule (bascule de rang N) ; d'autre part, l'entrée de la bascule de rang N-3 n'est pas constituée par la sortie de la bascule de rang N-4 mais par la sortie de la porte P2 qui a pour entrées la sortie de la bascule de rang N-4 et la sortie de la dernière bascule (de rang N).

Les sorties du générateur pseudo-aléatoire sont prises sur les sorties des bascules D. Dans l'exemple représenté, les sorties S1, S2, S3 sont respectivement les sorties des troisième, quatrième, et cinquième bascules.

On a prévu aussi, pour des raisons qui vont maintenant être expliquées, deux autres sorties Sa et Sb fournissant des bits pseudo-aléatoires. Ces sorties sont les sorties des bascules de rangs N-2 et N-1, c'est-à-dire les deux qui précèdent la dernière de la série.

La figure 3 représente le générateur de séquences pseudo-aléatoires GPA associé avec l'oscillateur OSC qui délivre la fréquence F du signal d'horloge du générateur.

L'oscillateur OSC est un oscillateur à fréquence commandée. La fréquence est commandée par un signal d'entrée à cinq bits. Ces cinq bits représentent une séquence pseudo-aléatoire fournie par le générateur GPA lui-même à travers ses sorties S1, S2, S3, Sa, Sb.

Ainsi, la fréquence de l'oscillateur varie pseudo-aléatoirement, de sorte que le caractère aléatoire des bits S1, S2, S3 est renforcé.

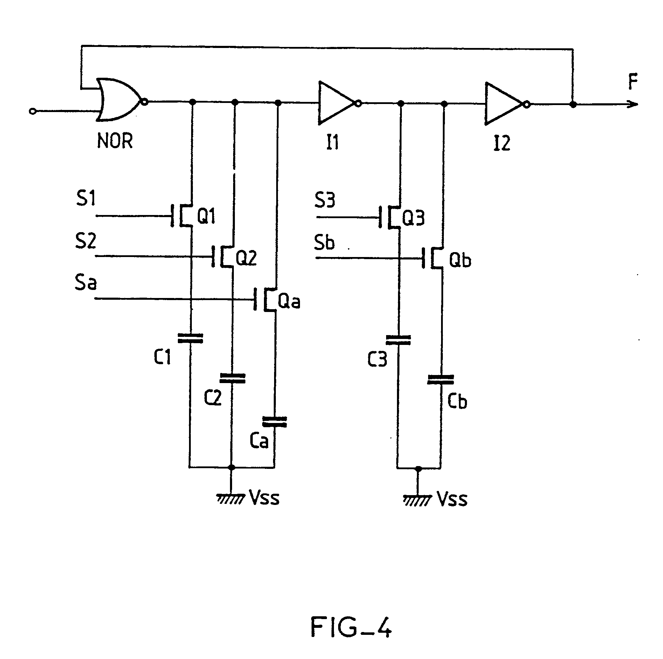

La figure 4 représente à titre d'exemple comment on peut réaliser l'oscillateur OSC à fréquence variable :

L'oscillateur comprend une porte NOR dont la sortie est reliée à l'entrée d'un premier inverseur I1 ; la sortie du premier inverseur I1 est reliée à l'entrée d'un deuxième inverseur I2 dont la sortie est rebouclée sur une entrée de la porte NOR. L'autre entrée de la porte NOR sert simplement à recevoir un signal d'inhibition de l'oscillateur si on désire avoir cette possibilité d'inhibition.

Ce bouclage de trois fonctions inverseuses en cascade produit une oscillation dont la fréquence est réglée par des capacités insérées d'une part entre la sortie de la porte NOR et une masse (Vss) et d'autre part entre la sortie du premier inverseur I1 et la masse.

Entre la sortie de la porte NOR et la masse, on a prévu trois capacités en parallèle C1, C2, et Ca, qui peuvent être cependant déconnectées chacune par un transistor respectif en série avec elle. Les transistors respectifs Q1, Q2, Qa, sont commandés chacun par une sortie respective S1, S2, Sa du générateur pseudo-aléatoire GPA.

De même, entre la sortie de l'inverseur I1 et la masse Vss, on a prévu deux capacités en parallèle C3 et Cb, qui peuvent être déconnectées chacune par un transistor respectif Q3, Qb en série avec elle. Q3 et Qb sont commandés chacun par une sortie respective S3, Sb du générateur GPA.

Selon l'état des bits S1, S2, S3, Sa, Sb, la fréquence F prendra une valeur parmi 32 valeurs possibles ; les séquences de bits pseudo-aléatoires présentes notamment sur les sorties S1, S2, S3, seront donc produites à une fréquence variant elle-même aléatoirement ; cela renforce le caractère aléatoire des bits produits sur les sorties S1, S2, S3, donc le caractère aléatoire de la consommation de courant du circuit de protection selon l'invention. On aboutit ainsi à une très bonne protection contre la détection d'informations confidentielles par lecture du courant consommé aux bornes d'un circuit intégré pendant une opération de lecture ou d'écriture de ces informations.

**Revendications**

1. Circuit de protection de données confidentielles d'une mémoire en circuit intégré, caractérisé en ce qu'il comprend sur le même circuit intégré plusieurs cellules de simulation (T1, T2, T3) susceptibles d'être commandées individuellement, ces cellules ayant deux états de consommation de courant différents selon le signal qui les commande, et un générateur de séquences pseudo-aléatoires (GPA) pour commander ces cellules, de sorte qu'elles se trouvent chacune pseudo-aléatoirement dans un état ou un autre, rendant ainsi plus difficile la détermination d'informations confidentielles par lecture de consommation globale de courant du circuit intégré.

2. Circuit de protection selon la revendication 1, caractérisé en ce que les cellules consomment dans leurs deux états des courants sensiblement égaux à ceux de cellules mémoires, le premier état correspondant à la consommation de la cellule mémoire dans un état logique 0 et le deuxième correspondant à la consommation de la cellule mémoire dans un état logique 1.

3. Circuit de protection selon l'une des revendications 1 et 2, destiné à la protection d'une mémoire vis-à-vis d'une lecture des informations stockées, caractérisé en ce que les cellules de simulation sont constituées essentiellement par un transistor identique aux transistors constituant les cellules de la mémoire.

4. Circuit de protection selon l'une des revendications 1 et 2, destiné à la protection d'une mémoire EPROM ou EEPROM pendant l'écriture d'informations confidentielles, caractérisé en ce que chaque cellule de simulation est constituée par un transistor à grille flottante dont la grille flottante et la grille de commande sont court-circuitées.

5. Circuit de protection selon l'une des revendications 1 à 4, caractérisé en ce que le générateur pseudo-aléatoire est constitué par une série de bascules en cascade, certaines sorties des bascules étant rebouclées sur des entrées à travers des portes OU-Exclusif (P1, P2).

6. Circuit de protection selon l'une des revendications 1 à 5, caractérisé en ce que le générateur pseudo-aléatoire est commandé par une fréquence d'horloge (F) dont la variation est pseudo-aléatoire.

7. Circuit de protection selon la revendication 6, caractérisé en ce qu'il comprend un oscillateur (OSC) à fréquence commandée ayant plusieurs entrées de commande de fréquence, ces entrées étant reliées à des sorties (S1, S2, S3, Sa, Sb) du générateur pseudo-aléatoire (GPA).

8. Circuit de protection selon l'une des revendications 1 à 7, caractérisé en ce que chaque cellule de simulation est commandée par la sortie d'une bascule D respective (BD1, BD2, BD3) recevant comme entrées d'une part un signal d'horloge commun (HL) et d'autre part chacune une sortie respective (S1, S2, S3) du générateur pseudo-aléatoire.

9. Circuit de protection selon l'une des revendications 1 à 8, caractérisé en ce que chaque cellule de simulation comprend un transistor (T1, T2, T3 respectivement), et en ce que ce transistor est connecté en série avec un transistor d'inhibition de fonctionnement (T'1, T'2, T'3) respectivement entre les bornes d'alimentation Vcc, Vss, du circuit intégré comprenant la mémoire à protéger.

**Claims**

1. A circuit for the protection of the confidential data of an integrated circuit memory, characterized in that in the same integrated circuit it comprises a plurality of simulation cells (T1, T2 and T3) adapted to be individually driven, said cells having two different conditions of current consumption in accordance with the signal driving them, and a generator of pseudo-random sequences (GPA) in order to drive the cells in such a manner that in a pseudo-random manner they are in one condition or the other condition so that they render more difficult the ascertainment of confidential information by reading the overall current requirement of the integrated circuit.

2. The protection circuit as claimed in claim 1, characterized in that in their two conditions the cells consume currents essentially equal to those of the memory cells, the first condition corresponding to the consumption of the memory cell in a logical 0 condition and the second one corresponding to the consumption of the memory cell in the logical 1 condition.

3. The protection circuit as claimed in claim 1 or claim 2, intended for the protection of a memory against reading of the stored information, characterized in that the simulation cells are constituted essentially by a transistor identical to the transistors constituting the cells of the memory.

4. The protection circuit as claimed in claim 1 or claim 2, adapted for the protection of an EPROM or EEPROM during the writing of confidential information therein, characterized in that each simulation cell is constituted by a transistor with a floating grid, whose floating grid and control grid are short circuited.

5. The protect circuit as claimed in any one of the preceding claims 1 through 4, characterized in that the pseudo-random generator is constituted by a set of flipflops connected in series, certain outputs of the flipflops being returned to inputs through exclusive OR gates (P1 and P2).

6. The protection circuit as claimed in any one of the preceding claims 1 through 5, characterized in that the pseudo-random generator is driven by a clock frequency (F) whose variation is pseudo-random.

7. The protection circuit as claimed in claim 6, characterized in that it comprises an oscillator (OSC) with a controlled frequency, having a plurality of frequency control inputs, such inputs being connected with outputs (S1, S2, S3, Sa and Sb) of the pseudo-random generator (GPA).

8. The protect circuit as claimed in any one of the preceding claims 1 through 7, characterized in that each simulation cell is driven by the output of a respective D flipflop (BD1, BD2 and BD3) receiving as inputs on the one hand a common clock signal (HL) and on the other hand a respective output (S1, S2 and S3) of the pseudo-random generator.

9. The protection circuit as claimed in any one of the preceding claims 1 through 8, characterized in that each simulation cell comprises a transistor (T1, T2, and, respectively, T3) and in that such transistor is connected in series with a function inhibiting transistor (T'1, T'2 and T'3) respectively between the feed terminals Vcc, Vss, of the integrated circuit comprising the memory to be protected.

**Patentansprüche**

1. Schutzschaltung für vertrauliche Daten eines Speichers in Form einer integrierten Schaltung, dadurch gekennzeichnet, daß sie auf der gleichen integrierten Schaltung eine Mehrzahl von Simulationszellen (T1, T2, T3), die für eine individuelle Steuerung geeignet sind und jeweils entsprechend dem sie steuernden Signal zwei verschiedene Stromverbrauchszustände besitzen, und einen Pseudozufallsfolgen-Generator (GPA) zum Steuern dieser Zellen, derart, daß sie sich pseudozufällig im einen oder im anderen Zustand befinden, aufweist, wodurch die Bestimmung der vertraulichen Informationen durch das Lesen des Gesamtstromverbrauchs der integrierten Schaltung schwieriger gemacht wird.

2. Schutzschaltung gemäß Anspruch 1, dadurch gekennzeichnet, daß die Zellen in ihren zwei Zuständen Ströme verbrauchen, die im wesentlichen gleich denjenigen der Speicherzellen sind, wobei der erste Zustand dem Verbrauch der Speicherzelle in einem logischen Zustand 0 entspricht und der zweite Zustand dem Verbrauch der Speicherzelle in einem logischen Zustand 1 entspricht.

3. Schutzschaltung gemäß einem der Ansprüche 1 und 2, die für den Schutz eines Speichers gegen ein Lesen der gespeicherten Informationen bestimmt ist, dadurch gekennzeichnet, daß die Simulationszellen im wesentlichen durch einen Transistor gebildet werden, der mit den die Speicherzellen bildenden Transistoren identisch ist.

4. Schutzschaltung gemäß einem der Ansprüche 1 und 2, die für den Schutz eines EPROM- oder EEPROM-Speichers während des Schreibens von vertraulichen Informationen bestimmt ist, dadurch gekennzeichnet, daß jede Simulationszelle durch einen Transistor mit schwebenden Gate gebildet wird, dessen schwebendes Gate mit dem Steuergate kurzgeschlossen ist.

5. Schutzschaltung gemäß einem der Ansprüche 1 bis 4, dadurch gekennzeichnet, daß der Pseudozufallsgenerator durch eine Reihe von kaskadenartig angeordneten Kippschaltungen gebildet wird, wobei bestimmte Ausgänge der Kippschaltungen über Exklusiv-ODER-Gatter (P1, P2) an Eingänge zurückgeführt werden.

6. Schutzschaltung gemäß einem der Ansprüche 1 bis 5, dadurch gekennzeichnet, daß der Pseudozufallsgenerator durch eine Taktfrequenz (F) gesteuert wird, deren Veränderung pseudozufällig ist.

7. Schutzschaltung gemäß Anspruch 6, dadurch gekennzeichnet, daß sie einen Oszillator (OSC) mit gesteuerter Frequenz umfaßt, der eine Mehrzahl von Frequenzsteuereingängen besitzt, wobei diese Eingänge mit Ausgängen (S1, S2, S3, Sa, Sb) des Pseudozufallsgenerators (GPA) verbunden sind.

8. Schutzschaltung gemäß einem der Ansprüche 1 bis 7, dadurch gekennzeichnet, daß jede Simulationszelle durch den entsprechenden Ausgang D einer Kippschaltung (BD1, BD2, BD3), die als Eingaben einerseits ein gemeinsames Taktsignal (HL) und andererseits jeweils eine entsprechende Ausgabe (S1, S2, S3) des Pseudozufallsgenerators empfängt, gesteuert wird.

9. Schutzschaltung gemäß einem der Ansprüche 1 bis 8, dadurch gekennzeichnet, daß jede Simulationszelle einen Transistor (T1 bzw. T2 bzw. T3) umfaßt und daß dieser Transistor mit einem Funktionssperrtransistor (T'1, T'2, T'3) zwischen den Versorgungsanschlüssen Vcc bzw. Vss der den zu schützenden Speicher enthaltenden integrierten Schaltung in Reihe geschaltet ist.

FIG-1

## FIG_2

## FIG_3

EP 0 368 727 B1

FIG_4